# EUROPÄISCHE PATENTANMELDUNG

(11) **EP 1 113 242 A2**
(43) Veröffentlichungstag der Anmeldung: **04.07.2001**
(21) Anmeldenummer: 00127530.4
(22) Anmeldetag: 15.12.2000
(51) Int. Cl.: G01B 3/10, G01B 5/02

(54) **Gerät zum massgenauen Zuschneiden**

(30) Priorität: 28.12.1999 DE 29923042 U
(71) Anmelder: Schwarz, Hans-Georg, 20251 Hamburg (DE)
(72) Erfinder: Schwarz, Hans-Georg, 20251 Hamburg (DE)
(74) Vertreter: Hansmann, Dierk, Dipl.-Ing.

(57) **Zusammenfassung**

Bei einem Gerät dieser Art ist vorgesehen, daß der Handgriff für eine Schneidklinge eine fest zugeordnete Aufnahme für ein ausziehbares Maßband aufweist. Das Maßband ist rechtwinklig zur Schnittlinie der Schneidklinge ausziehbar und festsetzbar angeordnet. Zusätzlich ist vorgesehen, daß die Aufnahme für das Maßband ein Sichtfenster zur maßgenauen Einstellung des durchzuführenden Zuschnitts aufweist.

## Beschreibung

Die Erfindung bezieht sich auf ein Gerät zum maßgenauen Zuschneiden von Werkstoffen, wie Rigipsplatten, zu ihrer Verarbeitung, bestehend aus einem Handgriff für eine Schneidklinge und einer Öffnung durch die die Schneidklinge in eine Arbeitsstellung ausfahrbar und festsetzbar ist.

Es haben sich sogenannte Schneidemesser für Rigipsplatten als nützliches Arbeitsgerät bewährt. Hierbei ist es bekannt, die Schneidklinge im Handgriff aufzunehmen und aus dem Innenraum herauszufahren, um den eigentlichen Schneidvorgang durchzuführen. Bei der Verarbeitung von Plattenelementen, wie beispielsweise Rigipsplatten, hat sich herausgestellt, daß es erforderlich ist, entsprechend den vorgegebenen Verhältnissen für einen durchzuführenden Schnitt Abmessungen einzuhalten. Es ist dabei in der Handhabung umständlich, mit einem gesonderten Gerät diese Bemessung vorzunehmen, da zwei Anordnungen vorhanden und gehandhabt werden müssen.

Die Aufgabe der Erfindung ist es, eine einheitliche Anordnung für die Bemessung und den Schnitt zu schaffen, die eine einfache Handhabung gewährleistet und die Arbeitsweise mit einem Gerät ohne Zuordnungsprobleme ermöglicht.

Die Lösung dieser Aufgabe erfolgt erfindungsgemäß dadurch, daß der Handgriff eine fest zugeordnete Aufnahme für ein ausziehbares Maßband aufweist, das rechtwinklig zur Schnittlinie der Schneidklinge ausziehbar und festsetzbar zugeordnet ist, wobei die Aufnahme für das Maßband ein Sichtfenster zur maßgenauen Einstellung des durchzuführenden Zuschnitts aufweist.

Hierdurch wird der Vorteil erzielt, daß eine fest Zuordnung von Maßband und Schneidklinge erfolgt, so daß keine fehlerhafte Zuordnung erfolgt. Ferner steht für die Bearbeitung immer die gesamte Anordnung zur Durchführung von Arbeiten zur Verfügung.

Ferner wird vorgeschlagen, daß am Handgriff für die Schneidklinge ein verschwenkbarer Bedienungshebel angeordnet ist, über den eine Fixierung des eingestellten Maßbandes und der ausgefahrenen Schneidklinge durchführbar ist.

Um eine Führung für einen bemaßten Schnittvorgang zu erhalten, wird vorgeschlagen, daß das Maßband am außenliegenden Ende als Kantengleitelement ausgebildet ist.

Um dem Bearbeiter das Arbeitsgerät funktionsgerecht zur Verfügung zu halten, ist vorgesehen, daß im Bereich des der Schneidklinge abgewandten Endes des Handgriffes eine Umhänge-Halteschlaufe angeordnet ist, die mindestens teilweise dehnbar ist.

In der Zeichnung ist ein Ausführungsbeispiel der Erfindung schematisch dargestellt. Es zeigen:

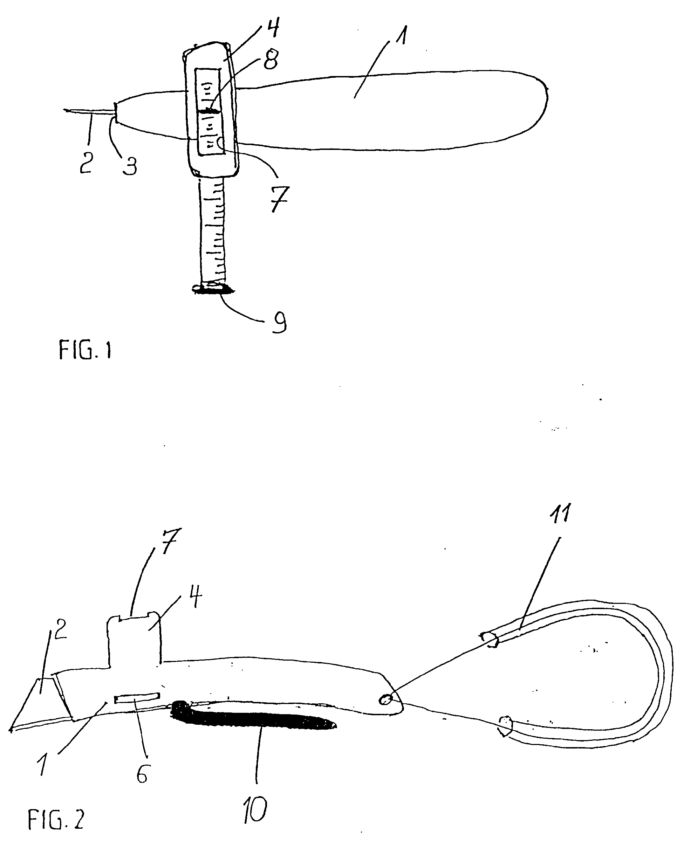

- Fig. 1: eine Draufsicht auf ein Gerät **und**
- Fig. 2: eine Seitenansicht eines Gerätes mit einer Halteschlaufe.

Das dargestellte Gerät besteht aus einem Handgriff 1 mit einer ausfahrbaren Schneidklinge 2, die durch eine Öffnung 3 im Handgriff 1 nach außen geführt wird. Zusätzlich trägt der Handgriff 1 eine Aufnahme 4 für ein ausziehbares Maßband 5. Das Maßband 5 ist dabei über eine Öffnung 6 rechtwinklig zur Schnittlinie der Schneidklinge 2 ausziehbar. Hierbei ist dem Maßband 5 eine Rückholfeder zugeordnet.

Die Aufnahme 4 für das Maßband 5 besitzt ein Sichtfenster 9 mit einer Kenrnzeichnung 8 zur maßgenauen Einstellung des ausgezogenen Maßbandes 5. Am außenliegenden Ende des Maßbandes 5 ist ein Kantengleitelement 9 zur abstandsgenauen Führung der Schneidklinge 2 angeordnet.

In dieser Ausbildung ist am Handgriff 1 ein Bedienungshebel 10 angelenkt, über den die Schneidklinge 2 ausgefahren und fixiert wird. Auch das ausgezogene und eingestellte Maßband 5 wird über die Bedienungshebel 10 gleichzeitig fixiert.

Um beide Hände für Arbeiten nach dem Zuschnitt zu haben und gleichzeitig eine Zugriffsbereitschaft zu ermöglichen, ist der Handgriff 1 über eine Umhänge-Halteschlaufe 11 mit einer entsprechenden Dehnbarkeit angeordnet.

## Patentansprüche

1. Gerät zum maßgenauen Zuschneiden von Werkstoffen, wie Rigipsplatten, zu ihrer Verarbeitung, bestehend aus einem Handgriff für eine Schneidklinge und einer Öffnung durch die die Schneidklinge in eine Arbeitsstellung ausfahrbar und festsetzbar ist, dadurch gekennzeichnet, daß der Handgriff (1) eine fest zugeordnete Aufnahme (4) für ein ausziehbares Maßband (5) aufweist, das rechtwinklig zur Schnittlinie der Schneidklinge (2) ausziehbar und festsetzbar zugeordnet ist, wobei die Aufnahme (4) für das Maßband (5) ein Sichtfenster (7) zur maßgenauen Einstellung des durchzuführenden Zuschnitts aufweist.

2. Gerät nach Anspruch 1, dadurch gekennzeichnet, daß am Handgriff (1) für die Schneidklinge (2) ein verschwenkbarer Bedienungshebel (10) angeordnet ist, über den eine Fixierung des eingestellten Maßbandes (5) und der ausgefahrenen Schneidklinge (2) durchführbar ist.

3. Gerät nach Anspruch 1 oder 2, dadurch gekennzeichnet, daß das Maßband (5) am außenliegenden Ende als Kantengleitelement (9) ausgebildet ist.

4. Gerät nach einem der Ansprüche 1 bis 3, dadurch gekennzeichnet, daß im Bereich des der Schneidklinge (2) abgewandten Endes des Handgriffes (1) eine Umhänge-Halteschlaufe (11) angeordnet ist, die mindestens teilweise dehnbar ist.
